# EUROPEAN PATENT APPLICATION

(11) **EP 0 634 521 A1**
(43) Date of publication of application: **18.01.1995**
(21) Application number: 94110420.0
(22) Date of filing: 05.07.1994
(51) Int. Cl.: D21C 9/16, D21C 9/153, D21C 9/10, D21C 5/02

(54) **Method for bleaching lignocellulose-containing fibres**

(30) Priority: 16.07.1993 SE 9302427; 10.11.1993 SE 9303713
(71) Applicant: EKA NOBEL AB, S-445 80 Bohus (SE)
(72) Inventor: Sundblad, Birgitta, S-412 66 Göteborg (SE); Albertsson, Sverker, S-414 65 Göteborg (SE)
(74) Representative: Schöld, Zaid

(57) **Abstract**

In an improved method for bleaching recycled fibres by means of hydrogen peroxide, bleaching is performed in the presence of ozone or a peracid or salts thereof. While using existing apparatus and control equipment, the inventive method enables more efficient utilisation of the bleaching capacity of hydrogen peroxide than known methods. Recycled fibres can thus be bleached to a much higher degree of brightness without increasing the amount of hydrogen peroxide, or be bleached to the same degree of brightness with a reduced amount of hydrogen peroxide.

## Description

The present invention relates to an improved method for bleaching recycled fibres by means of hydrogen peroxide, bleaching being performed in the presence of ozone or a per-acid or salts thereof. While using existing apparatus and control equipment, the inventive method enables more efficient utilisation of the bleaching capacity of hydrogen peroxide than prior art methods. With the inventive method, recycled fibres can thus be bleached to a much higher degree of brightness without increasing the amount of hydrogen peroxide, or be bleached to the same degree of brightness with a reduced amount of hydrogen peroxide.

### Background of the Invention

Before, paper, board and cardboard used to be made from virgin fibres, i.e. fibres not previously used in any paper, board or cardboard product. As the demand for recycling increases, the proportion of recycled fibres in such products will gradually be augmented. Since recycled fibres have a lower brightness than virgin fibres produced by chemical as well as mechanical treatment, this lower brightness will determine the maximum brightness obtainable. As a result, steps enhancing the brightness of recycled fibres will become increasingly important.

The deinking and the bleaching of recycled fibres are often performed by means of peroxide-containing compounds, usually hydrogen peroxide. In defibration, hydrogen peroxide is thus used for counteracting the brightness-reducing effect of the alkaline aqueous solution and for facilitating the separation of printing ink. In addition, hydrogen peroxide is often used in one or more plain bleaching stages further on in the process for increasing the brightness of the fibres.

The prior art encompasses separate use of hydrogen peroxide, ozone and per-acids in the processing of waste paper. Thus, GB-A-1,564,783 relates to a process for disinfecting waste paper in an aqueous hydrogen-peroxide solution without any addition of alkali. Further, DE-A-30 01 862 concerns a process of dry disinfection of waste paper by means of ozone, the waste paper being then mixed with water and defibrated. US-A-4,548,674 relates to a process for the regeneration of waste paper containing polymer impurities, in particular glue and binders. This process makes it possible to avoid such a thing as the formation of glue spots on sheets of paper by treating the waste paper with a peracid at an acid pH.

### Description of the Invention

The invention relates to a method for treating stocks containing recycled fibres, according to the appended claims, whereby bleaching by means of hydrogen peroxide is rendered significantly more effective. With the method according to the invention, essentially the full brightness-increasing potential can be utilised in the bleaching of recycled fibres by means of hydrogen peroxide. This is achieved without any considerable additions of chemicals or any far-reaching process modifications e.g. regarding the apparatus for adding ozone or peracid, or the pH or the temperature of the stock.

The present invention provides a method for bleaching recycled fibres by means of hydrogen peroxide, bleaching being performed in a stock in the presence of ozone or a peracid or salts thereof.

By selecting a suitable combination of the content of ozone or peracid or salts thereof, the temperature, the residence time and the pH, the inventive method enables an increase in pulp brightness in the order of 5% ISO, as compared with bleaching by means of hydrogen peroxide only.

The method according to the invention includes at least one stage in which the recycled fibres are bleached by means of hydrogen peroxide. Normally, the recycled fibres are bleached by means of hydrogen peroxide during the defibration, but bleaching may also be performed further on in the process in the dispersing machine for admixing the bleaching agent, and/or in one or more bleaching towers in the final bleaching stage. Suitably, the method according to the invention is used when the bleaching of the recycled fibres by means of hydrogen peroxide is performed during the defibration. Preferably, any supplementary bleaching of the recycled fibres is also performed by means of hydrogen peroxide, since residual contents of ozone or peracid or salts thereof enhance the effect of hydrogen-peroxide bleaching also in later stages.

The hydrogen peroxide used in the inventive method may wholly or partly consist of hydrogen peroxide, which is added in combination with peracid or salts thereof. For instance, equilibrium peracetic acid may contain considerable amounts of hydrogen peroxide, which is advantageously used in the inventive method.

The amount of hydrogen peroxide added in the bleaching may be in the range of from about 1 kg/tonne to about 40 kg/tonne of dry recycled fibres, based on 100% hydrogen peroxide. The upper limit is not critical, but is motivated by reasons of economy. Suitably, the amount of hydrogen peroxide is in the range of 1-30 kg/tonne of dry recycled fibres, preferably in the range of 5-15 kg/tonne of dry recycled fibres, based on 100% hydrogen peroxide.

In hydrogen-peroxide bleaching in the presence of ozone or peracid or salts thereof, the temperature in the stock may be in the range of from about 10°C to about 75°C, suitably in the range of 30-60°C, and preferably in the range of 40-50°C. The residence time for the bleaching in the presence of ozone or peracid or salts thereof may be in the range of from about 5 min to about 120 min, suitably in the range of 10-60 min, and preferably in the range of 20-40 min.

The stock used in the inventive method may be any aqueous liquid containing recycled fibres. The concentration of fibres in the stock where ozone or peracid or salts thereof are present, should be below about 30% by weight. The fibre concentration suitably is below 20% by weight, preferably below 10% by weight. The inventive method is advantageously implemented on diluted stocks, e.g. at the end of the defibration when the fibre concentration normally is low and the chemicals involved often can be added to the stock along with other chemicals without the need of any special equipment.

When carrying out the method according to the invention, the stock can be alkaline. Suitably, the pH of the stock is in the range of 7.5-13, preferably in the range of 8-12. It is especially preferred that the pH in the stock is in the range of 8.5-11. The pH in the stock is reduced by the addition of peracid or salts thereof. An adjustment of the pH may be needed to maintain an alkaline pH also after the addition of peracid or salts thereof, depending on the amount added and the pH in the stock prior to the addition. Examples of pH-increasing chemicals suitably used in the inventive method are sodium hydroxide, sodium carbonate, sodium hydrogencarbonate and water glass.

In the method according to the invention, use is made of organic and inorganic peracids or salts thereof. As organic peracid, use is made of aliphatic peracids, aromatic peracids, or salts thereof. Suitably, peracetic acid or performic acid is used. As inorganic peracid, use is preferably made of peroxomonosulphuric acid (Caro's acid) or salts of inorganic peracids, such as peroxocarbonate, different perborates or peroxosulphates. Sodium is suitably used as cation in the salts, since such salts normally are inexpensive and sodium is a natural component of the chemical balance in the pulp mill. Peracetic acid is preferably used, being advantageous in terms of production and utilisation. In addition, peracetic acid is limitedly corrosive. Any wastewater containing, inter alia, the decomposition products of peracetic acid is easily recycled to the chemical recovery.

Peracetic acid according to invention can be produced directly in the bleaching stage by reacting hydrogen peroxide and an activator, so-called in-situ peracetic acid or by reacting acetic anhydride and hydrogen peroxide. Peracetic acid may also be produced by reacting acetic acid and hydrogen peroxide, giving what is generally referred to as equilibrium peracetic acid, or by distilling equilibrium peracetic acid in order to remove hydrogen peroxide, acetic acid and sulphuric acid. Destilled, equilibrium or in-situ peracetic acid is used in the inventive method. The use of in-situ peracetic acid minimizes the risk of transporting and handling peracetic acid.

The activator, at the production of in-situ peracetic acid, can be, e.g. an acylated nitrogen compound, aliphatic or aromatic ester or a phosphoric anhydride. Suitably, an acylated nitrogen compound is used, preferably a di- or tetra acylated nitrogen compound. An example of a diacylated nitrogen compound which suitably can be used according to the invention is diacetylmetyleneamine. Examples of suitable tetraacylated nitrogen compounds are tetraacetylethylenediamine (TAED) and tetraacetylglucoluril (TAGU). Use is preferably made of diacetylmetyleneamine or tetraacetylethylenediamine (TAED).

When hydrogen peroxide is mixed with tetraacylated nitrogen compounds, such as TAED or TAGU, a maximum of two acetyl groups with two molecules hydrogen peroxide reacts and forms two molecules of peracetic acid. When hydrogen peroxide is mixed with diacylated nitrogen compounds such as diacetylmetyleneamine reacts at maximum one of the acetyl groups with one molecule hydrogen peroxide and forms one molecule peracetic acid. The mole ratio between the acetyl groups of the nitrogen compounds and hydrogen peroxide can be in the range of from about 8:1 up to about 1:50, suitably from 3:1 up to 1:25 and preferably from 2:1 up to 1:15.

The production of in-situ peracetic acid can be performed directly in the liquid or immediately before the addition to the liquid. Depending of the type of compound and the adding-position, the activator can be added as a water solution, a slurry or a powder. The production directly in the liquid can be performed in the way that the activator is added to the stock comprising hydrogen peroxide. When producing in-situ peracetic acid immediately before the addition to the liquid, the activator can be mixed with a water solution comprising hydrogen peroxide. The concentration of hydrogen peroxide in the water solution can be from about 0.01 up to about 7 g/l, suitably from 0.1 up to 3 g/l.

Using the prepared equilibrium peracetic acid directly, without any intermediary distillation, enables utilisation of the hydrogen peroxide as well. In the inventive method, the weight ratio of peracetic acid to hydrogen peroxide may be in the range of from about 10:1 to about 1:5, suitably in the range of 7:1-1:3, and preferably in the range of 5:1-1:1.

The suitable content of peracid or salts thereof in the stock depends, inter alia, on the temperature, the residence time available and the pH. When implementing the inventive method, the content of peracid or salts thereof may be in the range of from about 2 mg/l to about 2500 mg/l of the stock, based on 100% peracetic acid. Suitably, this content is in the range of 10-750 mg/l of the stock, preferably in the range of 100-300 mg/l of the stock, based on 100% peracetic acid.

The amount of ozone charged should be in the range of from about 10 mg/l to about 1000 mg/l of the stock, suitably in the range of 50-500 mg/l of the stock, and preferably in the range of 100-150 mg/l of the stock.

In the defibration of waste paper, the paper, water and the required chemicals are mixed in a pulper, a drum or a kneader pulper. Although the water may be fresh, the major part of the added water usually consists of white water recycled from a stage further on in the process. The chemicals are added in order to achieve pH adjustment, bleaching, deinking, and so forth. Examples of chemicals commonly used are sodium hydroxide, water glass, complexing agents, such as DTPA, hydrogen peroxide and deinking chemicals, such as surface-active agents. Ordinary conditions in the defibration include a fibre concentration of 5-20% by weight, a residence time of 10-30 min, and a pH of 10-11.5.

The defibration of the waste paper is followed by one or more stages of dispersion, screening, dewatering, dilution, flotation, washing and bleaching. A large amount of the printing ink is released from the fibres in the defibration by the added liquor swelling the fibres as well as by the mechanical treatment. The printing ink thus released is agglomerated into particles by means of a surface-active agent present. The properties of the surface-active agent are also of decisive importance for the effectiveness of the flotation, which follows upon coarse screening and dilution of the stock. In the flotation, the stock is conducted into a cell, into which air is blown from below. The agglomerated particles of printing ink are adsorbed on the surface of the ascending bubbles, whereupon the foam is separated. Instead of flotation, washing may be used for separating the printing ink. If so, large amounts of washing water are added, so that the printing ink is dispersed and accompanies the liquid phase. In washing, use is often made of one or more disc filters arranged in series for separating the dispersed printing ink. These stages can be carried out in a manner well-known to those skilled in the art. Thus, the number of stages and the design of the sequence depend, inter alia, on the bleached or unbleached state of the waste paper, the age of the waste paper, the aimed-at final brightness and, in the case of printing paper, the printing methods and the printing ink used.

As used herein, the term "recycled fibres" encompasses fibres that have been exposed by chemical or mechanical treatment, or combinations thereof. Chemical pulp produced by chemical treatment encompasses pulp digested according to the sulphate, the sulphite, the soda or the organosolv process, optionally after oxygen delignification. Mechanical pulp produced by mechanical treatment encompasses pulp produced by refining chips in a disc refiner (refiner mechanical pulp), pulp produced by grinding logs in a grinder (groundwood pulp), or modifications thereof. Examples of such modifications are thermomechanical, chemimechanical and chemi-thermomechanical pulp. Mechanical pulp used in the inventive method may have a yield based on wood of at least about 85%, suitable at least 90%, and preferably at least 95%.

The recycled fibres include lignocellulose-containing fibres of hardwood and softwood, as well as optional combinations thereof.

The invention and its advantages will now be illustrated in more detail with the aid of a non-restricting Example. The brightness of the pulp was determined according to SCAN C 11-75:R Standard Method. In the description, the Example and the claims, the figures in per cent and parts are all by weight, unless otherwise stated.

### Example 1

A stock containing 100% recycled fibres, of which 60% originated from old news print (ONP) and 40% originated from old magazines (OMG), was treated by means of equilibrium peracetic acid in accordance with the inventive method. The recycled fibres were bleached by means of hydrogen peroxide while defibrated in a drum. The peracetic acid was added to the stock at the end of the drum, where the fibre concentration was about 3.5% by weight. Hydrogen peroxide was charged in an amount of 6 kg/tonne of dry pulp, based on 100% hydrogen peroxide. The concentration of peracetic acid was 150 mg/l of the stock. Before the addition of peracetic acid, the stock had a pH of 10.0, which was reduced to 8.5 by the addition. In the drum, the stock had a temperature of 45°C, and the residence time was 30 min. The brightness of the pulp was assessed after the first flotation stage, where most of the printing ink had been removed. The results of the tests appear from the Table below.

**TABLE I**

| Test | Content of peracetic acid mg/l | Amount of hydrogen peroxide kg/tonne | Brightness % ISO |
|---|---|---|---|
| 1 | 0 | 6 | 54.3 |
| 2 | 150 | 0 | 56.5 |
| 3 | 150 | 6 | 59.1 |

It is evident from the Table that the bleaching of recycled fibres by means of hydrogen peroxide in the presence of equilibrium peracetic acid in accordance with the invention effectively increases the brightness of recycled fibres.

### Example 2

The fibre content of the stock was as in example 1 and the stock was treated with distilled peracetic acid. The recycled fibres were bleached by means of hydrogen peroxide while defibrated in a drum. The peracetic acid was added to the white water used as dilution water to the drum. The white water had a pH of 8.5 before addition, which was reduced to 8.3 by the addition. The pH after the pulper decreased from 9.5 to 9.4. The fibre concentration in the drum was as in example 1. Hydrogen peroxide was charged as in example 1. The concentration of peracetic acid was 150 mg/l of the stock. The temperature and the time was as is example 1. The brightness of the pulp was assessed after the first floatation stage, where most of the printing ink had been removed. The results of the tests appear from the Table below.

**TABLE II**

| Test | Content of peracetic acid mg/l | Amount of hydrogen peroxide kg/tonne | Brightness % ISO |
|---|---|---|---|
| 1 | 0 | 6 | 55.1 |
| 2 | 150 | 0 | 55.7 |
| 3 | 150 | 6 | 59.1 |

It is evident from the Table that the bleaching of recycled fibres by means of hydrogen peroxide in the presence of destilled peracetic acid in accordance with the invention, when destilled peracetic acid is added to the white water to the drum, increases the brightness of recycled fibres.

### Example 3

The fibre content of the stock was as in example 1 and the stock was treated with distilled peracetic acid. The recycled fibres were bleached by means of hydrogen peroxide while defibrated in a drum. Peracetic acid was added to pulper together with hydogen peroxide and the other chemicals. The pH after the pulper decreased from 9.5 to 9.4. The fibre concentration in the drum was as in example 1. Hydrogen peroxide was charged as in example 1. The concentration of peracetic acid was 150 mg/l of the stock. The temperature and the time was as is example 1. The brightness of the pulp was assessed after the first floatation stage, where most of the printing ink had been removed. The results of the tests appear from the Table below.

**TABLE III**

| Test | Content of peracetic acid mg/l | Amount of hydrogen peroxide kg/tonne | Brightness % ISO |
|---|---|---|---|
| 1 | 0 | 6 | 54.8 |
| 2 | 150 | 0 | 55.5 |
| 3 | 150 | 6 | 59.0 |

It is evident from the Table that the bleaching of recycled fibres by means of hydrogen peroxide in the presence of destilled peracetic acid in accordance with the invention, when destilled peracetic acid is added together with hydrogen peroxide and other chemicals, increases the brightness of recycled fibres.

## Claims

1. A method for bleaching recycled fibres by means of hydrogen peroxide, **characterised** in that bleaching is performed in a stock in the presence of ozone or a peracid or salts thereof.

2. A method according to claim 1, **characterised** in that the peracid or salts thereof comprises organic peracids or salts thereof.

3. A method according to claim 2, **characterised** in that the peracid is peracetic acid.

4. A method according to claim 3, **characterised** in that the peracetic acid is a distilled peracetic acid.

5. A method according to claim 3, **characterised** in that the peracetic acid is a equilibrium peracetic acid.

6. A method according to claim 3, **characterised** in that the peracetic acid is produced in-situ by reacting hydrogen peroxide and tetraacetylethylenediamine (TAED).

7. A method according to any one of the preceding claims, **characterised** in that at least some of the hydrogen peroxide is added along with the peracid or salts thereof.

8. A method according to any one of the preceding claims, **characterised** in that the stock is alkaline.

9. A method according to claim 8, **characterised** in that the pH in the stock is in the range of from 8 up to 12.

10. A method according to any one of the preceding claims, **characterised** in that the content of peracid or salts thereof is in the range of from 10 up to 750 mg/l of the stock, based on 100% peracetic acid.

11. A method according to any one of the preceding claims, **characterised** in that the temperature in the stock is in the range of from about 10°C to about 75°C.

12. A method according to any one of the preceding claims, **characterised** in that bleaching is performed during the defibration of waste paper.

13. A method according to any one of the preceding claims, **characterised** in that the fibre concentration of the stock is below 20% by weight during bleaching.
